# EUROPEAN PATENT SPECIFICATION

(11) **EP 3 779 639 B1**
(45) Date of publication and mention of the grant of the patent: **01.06.2022**
(21) Application number: 20191186.4
(22) Date of filing: 14.08.2020
(51) Int. Cl.: G06F 1/16, F16M 11/04, F16M 13/00, H04N 1/00, F16M 11/40, F16M 13/02, G06F 1/26

(54) **ELECTRONIC DISPLAY**
ELEKTRONISCHE ANZEIGE
AFFICHAGE ÉLECTRONIQUE

(30) Priority: 16.08.2019 US 201916542700
(43) Date of publication of application: 17.02.2021
(73) Proprietor: Creedon Technologies HK Limited, Sheung Wan Hong Kong (HK)
(72) Inventor: PALFREEMAN, Mark Creedon, Los Altos, CA 94024 (US); DUDAR, Marcin Wojciech, New Territories Hong Kong (HK); TANG, So Sum, Shau Kei Wan Hong Kong (HK); CHU, Lawrence Chun Hei, New Territories Hong Kong (HK)
(74) Representative: Carpmael, Robert Maurice Charles

(56) References cited:
- EP-A1- 2 387 124
- EP-A1- 3 010 216
- JP-A- 2009 147 085

## Description

### TECHNICAL FIELD

The present invention relates to an electronic display.

### BACKGROUND

A photo frame generally includes a frame holding an image and a stand supporting the frame in one orientation. Recently, digital photo frames have been drawing attentions due to its capability to display a large number of images, or even videos containing sounds.

Conventional digital photo frames usually include, in addition to the frame and the stand, an electrical connector connecting the photo frame to a power source for operation. However, the non-removable stand and the individual electrical connector may limit the applications of the digital photo frame. EP3010216 A1 discloses a device and a power supply for the device, wherein the device with a substantially rectangular shape has a display in front for displaying digital photos, positioned in a housing, while at the back it comprises at least one electrical socket to connect the power supply and the power supply has a first plug used to connect it to a power source and a second plug electrically connected thereto for placing in the electrical socket of the device, wherein the electrical socket of the device is located at the back of the housing, near the edge, and the second power supply plug is shaped and dimensioned such that when it is placed in the electrical socket it is a stand holding the device in a substantially vertical position. EP2387124 A1 discloses a charger device for use with a handheld communication device. The charger device comprises a cable, a connector element and a support element affixed to the connector element. The connector element includes a connector for engagement with a port of the handheld communication device. The support element is configured to support the handheld communication device in either one of a portrait orientation and a landscape orientation, when the connector is engaged with the port of the handheld communication device. JP2009147085 A discloses a concave area provided to the lower part of the rear surface of a housing of an electronic apparatus and a connecting terminal provided within the concave area for connection of the power supply cord and other cables. A stand is mounted at the rear surface of the housing so as to rise and fall to support the electronic apparatus in the rising state and to be placed in contact with the rear surface of the housing in the falling state. Accordingly, the power supply cord and other cables connected may be directed downward by leading these cables out of the housing and the space surrounded by the stand. Since the power supply cable and other cables can be held with the stand, the apparatus can be installed to a wall surface.

### SUMMARY OF THE INVENTION

It is an object of the invention to address the above needs, to overcome or substantially ameliorate the above disadvantages or, more generally, to provide a new or otherwise improved electronic display.

According to an aspect of the present invention, there is provided an electronic display comprising a screen for displaying digital content, an electronic operating circuit for operating the screen, a support supporting the screen and the operating circuit, and a stand. The support has a recess and includes engaging means for use in positioning of the support in one of a standing position in which the support stands on a surface and a hung position in which the support is hung on a surface. The stand has an engagement part engageable with the engaging means for standing the support on a surface in the standing position. The stand includes a first electrical connecting means for connecting the operating circuit to a power source. The electronic display also includes a second electrical connecting means for connecting the operating circuit to a power source. The second electrical connecting means includes an electrical connecting unit for use in the recess of the support in the hung position, with the engaging means engaging an engaging element on a surface from which the support is hung.

Preferably, the engagement part comprises a cover and at least one engaging part on the cover and engageable with the engaging means.

More preferably, said at least one engaging part comprises a hooking part.

Additionally or alternatively, the cover is adapted to cover the recess when the support is in the standing position.

Preferably, the cover is adapted to cover the engaging means when the support is in the standing position.

Preferably, the recess is adapted to receive the whole electrical connecting unit when the support is in the hung position.

Preferably, the engaging means comprises at least one hole.

More preferably, said at least one hole has a periphery having a part inter-engageable selectively with the engagement part of the stand when the support is in the standing position or with an engaging element on a surface from which the support is hung.

More preferably, said at least one hole comprises a keyhole.

Preferably, the engaging means is provided on at least opposite sides of the recess.

Preferably, the stand has an elongated body which is bendable and is adapted to stay bent and internally along which the first electrical connecting means extends.

More preferably, the first electrical connecting means includes a first electrical connector exposed at a far end of the stand relative to the support for electrical connection to a power source.

More preferably, the first electrical connecting means includes a second electrical connector at a near end of the stand relative to the support for electrical connection to the operating circuit.

Yet more preferably, the engagement part is provided at the near end of the stand alongside the second electrical connector.

Preferably, the second electrical connecting means includes a flat cable which is connected at one end with the electrical connecting unit, is connectable at the other end to a power source, and lies flat against the support when the electrical connecting unit is used in the recess of the support in the hung position.

Preferably, the recess is provided internally with a third electrical connector (socket) connected to the operating circuit, for connection selectively with the first electrical connecting means of the stand when the support is in the standing position or with the electrical connecting unit of the second electrical connecting means when the support is in the hung position.

Preferably, the operating circuit includes a wireless receiver for receiving digital content from a remote source and an image processor for processing the received digital content to be displayed on the screen.

Preferably, the digital content comprises still images, video images and sound.

Preferably, the electronic display comprises an electronic photo frame.

### BRIEF DESCRIPTION OF DRAWINGS

Embodiments of the invention will now be described, by way of example, with reference to the accompanying drawings in which:
Figure 1A is a front view of an electronic display according to one embodiment of the present invention, having a screen and a support supporting the screen;
Figure 1B is a rear view of the support of the electronic display of Figure 1A;
Figure 2 is a perspective view of a stand of the electronic display of Figure 1A;
Figure 3 is a rear perspective view of the electronic display of Figure 1A including the stand of Figure 2;
Figure 4A is a rear view of the electronic display of Figure 3, using the stand;
Figure 4B is a cross-sectional side view of the electronic display of Figure 4A, showing the mechanical connection between the support and the stand;
Figure 5 is a cross-sectional side view of the electronic display of Figure 4A, showing the electrical connection between the support and the stand;
Figure 6A is a rear perspective view of the electronic display of Figure 1A, using a second electrical connecting means for power connection;
Figure 6B is a rear perspective view of the electronic display of Figure 6A, showing the connection of the second electrical connecting means to the support;
Figure 7A is a perspective view of an upper terminal of the second electrical connecting means of Figure 6A;
Figure 7B is a top plan view of the upper terminal of Figure 7A;
Figure 7C is a perspective view of a lower terminal of the second electrical connecting means of Figure 6A;
Figure 7D is a bottom plan view of the lower terminal of Figure 7C;
Figure 8A is a rear perspective view of the electronic display of Figure 1A, using a power cable for power connection; and
Figure 8B is a cross-sectional side view of the electronic display of Figure 8A, showing the connection of the power cable to the support.

### DETAILED DESCRIPTION OF PREFERRED EMBODIMENT

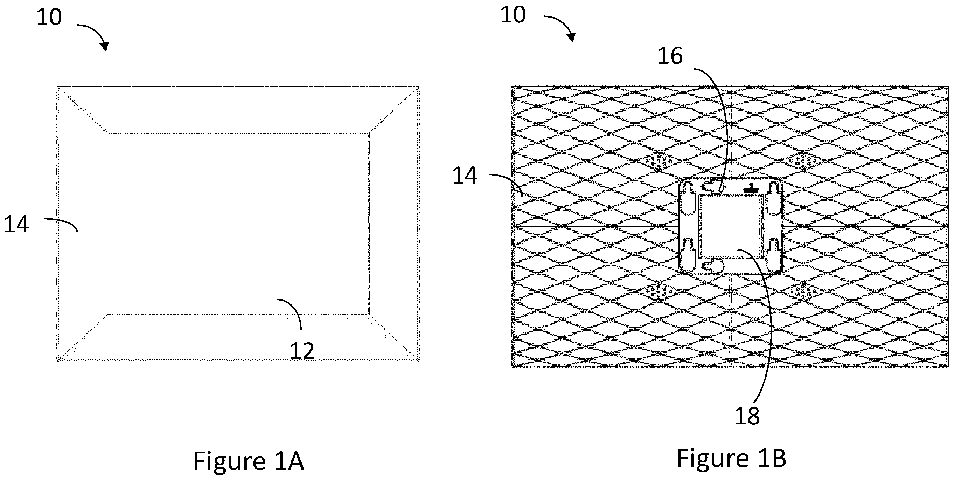

With reference to Figures 1 to 8B of the drawings, there is shown an electronic display 10 embodying the invention, which may be used for displaying digital content, such as still images, video images and sound. Preferably and as illustrated, the electronic display is an electronic photo frame 10. More preferably, the photo frame 10 is adapted to be used with different types of standard electrical connections to facilitate its positioning in different positions, as hereinafter described.

Referring initially to Figures 1A and 1B, the photo frame 10 includes a screen 12 for displaying digital content, an electronic operating circuit (not shown) for operating the screen 12, and a support 14 supporting the screen 12 and the operating circuit. In the case of the photo frame 10, it is its body i.e. frame that acts as the support 14, hence also referred to as body 14. The photo frame 10 includes a speaker unit that is mounted in the body 14 and connected to the operating circuit, enabling the audio capabilities in synchronization with the display of the video images.

In the illustrated embodiment, the screen 12 is encircled by the body 14 in a way that the screen 12 is secured by the body 14.

The screen 12 may be a liquid-crystal display (LCD). Preferably, in-plane switching (IPS) technology is utilized for the screen 12 for providing more consistent and accurate colour reproductions compared to conventional LCDs. The body 14 may be made of any suitable materials that are rigid and robust enough to support the whole screen 12 and the electronic components in the electronic operating circuit. For example, the body 14 may be made of wood, plastics or metallic materials.

The operating circuit preferably includes a wireless receiver, such as in particular a Wi-Fi module, for receiving digital content from a remote source (e.g. cloud), a memory (e.g. nonvolatile memory) for storing the received digital content, and an image processor for processing the received digital content to be displayed on the screen 12.

During operation, a user may send or upload photos and videos from a smartphone to a cloud using a mobile application (app) installed on the smartphone, e.g. a dedicated app or any other supported apps such as a social media app. The digital contents may alternatively be uploaded via email. These photos and videos may then be retrieved from the cloud using the wireless receiver. Upon receiving the photos and videos and storing them in the memory of the operating circuit, the stored photos and videos may be displayed directly on the screen 12 after being processed by the image processor. Alternatively, the photos and videos may be processed and stored in the memory in the form of a playlist that may be displayed in the future without repeating the uploading and retrieving processes.

The operating circuit may also include a wireless transmitter (e.g. as part of the Wi-Fi module) for communicating data and signals to a remote device (e.g. a smartphone). For example, the wireless transmitter may transmit an identification signal of the photo frame 10 to a smartphone, allowing a wireless connection between the photo frame 10 and the smartphone, thereby permitting the operating circuit of the photo frame 10 to access the cloud associated with the smartphone. The wireless communication may also allow the smartphone to control the photo frame 10 and to manage the settings of the photo frame 10, e.g. to adjust the brightness of the screen 12. Such wireless technology may include, apart from Wi-Fi, Bluetooth or Near Field Communication (NFC) technologies.

As shown in Figure 1B, the body 14 includes engaging means 16 for use in positioning of the body 14 in one of a standing position in which the body 14 stands on a surface (e.g. desktop) and a hung position in which the body 14 is hung on a surface (e.g. wall). The engaging means includes at least one hole 16. In the described embodiment, the engaging means includes six said holes 16, each shaped like a keyhole having a larger round end and a smaller opposite round end. A recess 18 is formed in the centre of the back of the body 14, with the holes 16 arranged on opposite sides of the recess 18. Providing the engaging means 16 at the centre of the body 14 helps balancing the whole photo frame 10 in the desired landscape or portrait orientation, when placed in the standing or hung position.

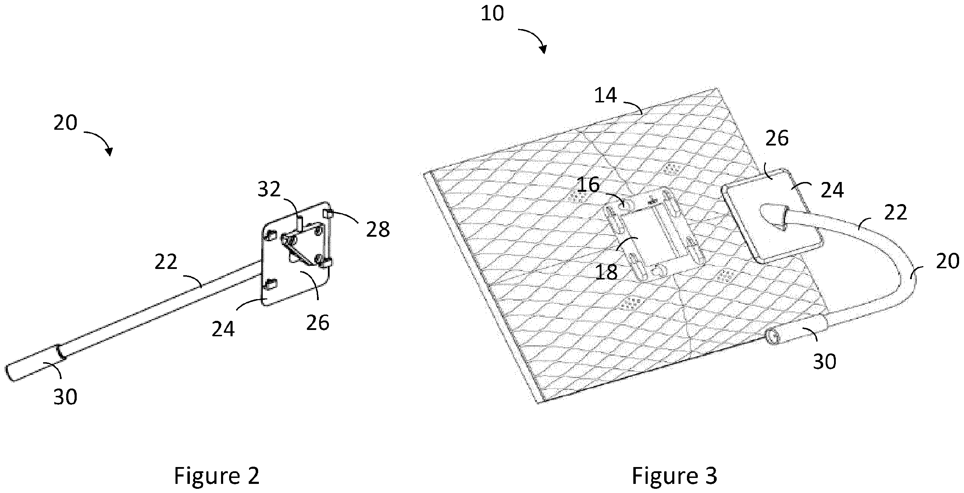

Figure 2 shows a stand 20 of the photo frame 10, which is used for standing the body 14 on a surface, often a horizontal surface. The stand 20 has an elongated body 22 and includes engagement part 24 engageable with the engaging means 16 for standing the body 14 on a surface in the standing position. The engagement part 24 is provided at a near end of the stand 20 relative to the body 14 alongside with an electrical connector in the form of a 3.5mm electrical plug 32. The engagement part 24 includes a cover 26 and at least one engaging part 28 on the cover 26 and engageable with the engaging means 16. The engagement part 24 is in the form of a square cover 26 supporting at its corners four hooking parts 28. Preferably, the hooking parts 28 are shaped and sized to fit the holes 16 on the body 14. The stand 20 also includes an electrical connecting means 30 for connecting the operating circuit to an external power source, e.g. DC power source, which will be discussed later.

Figure 3 shows that the elongated body 22 is bendable and is adapted to stay bent at various curvature or angle it is bent to. This is useful for standing the photo frame 10 in various angular positions in either landscape or portrait orientation, and particularly useful when there is limited space on a uniform surface for both the body 14 and the stand 20 to stand on. For example, the body 14 may be stood on a table, while the stand 20 connected thereto may be adjusted, compacted and placed on a stepped surface, thus saving space. Since the stand 20 is bendable, the photo frame 10 may be used in landscape and portrait orientations, or any angled orientations.

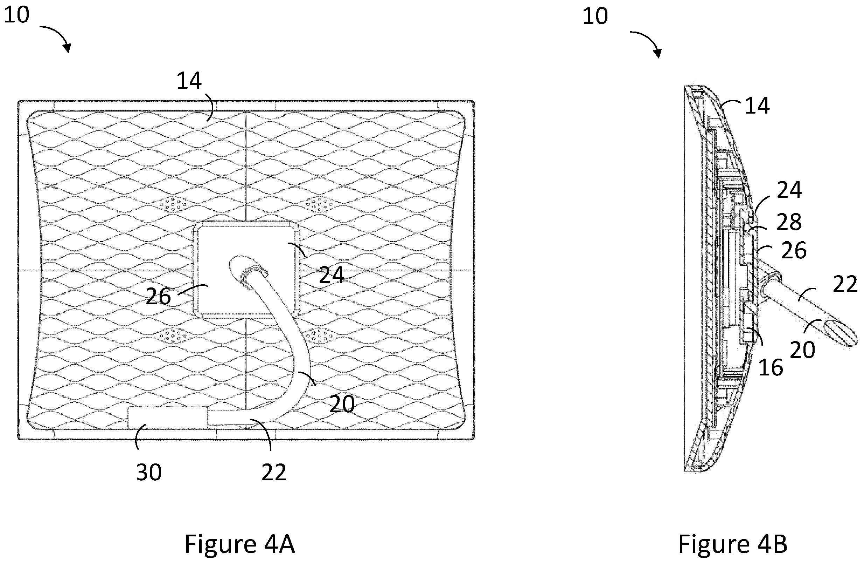

Figures 4A and 4B illustrate the stand 20 being engaged or received in part in the recess 18 of the body 14. The electrical plug 32 protrudes laterally from an inner block of the cover 26 (Figure 2), which is small enough to be accommodated in the recess 18. The cover 26, which is larger in footprint than the recess 18, covers the recess 18 when the stand 20 is fitted on the body 14. Further, the cover 26 is sufficiently large to also cover and conceal the holes 16, with the hooking parts 28 engaged with the holes 16, thereby resulting in a neat appearance.

Each of the holes 16 includes, at its smaller end, a periphery having a part that is inter-engageable with the hooking part 28 of the stand 20. When a user desires to use the photo frame 10 in a standing position, the use should first insert the hooking parts 28 on the cover 26 of the stand 20 into the larger ends of the respective holes 16, and then slide the cover 26 and thus the hooking parts 28 to reach and engage with the smaller ends, latching with the same.

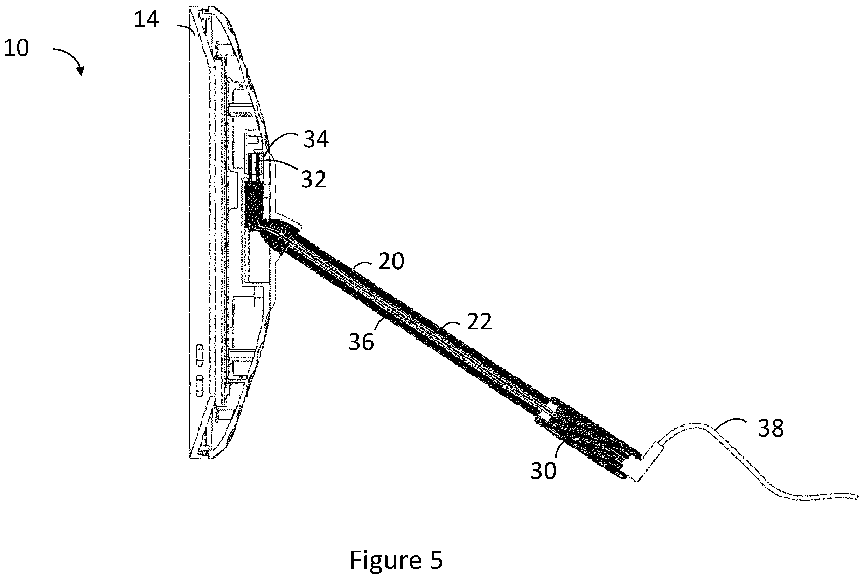

Figure 5 shows the electrical connection between the body 14 and the stand 20. The recess 18 of the body 14 is provided internally with a third electrical connector 34 connected to the operating circuit. Preferably, the third electrical connector 34 is an electrical socket sized to receive a 3.5mm electrical plug, i.e. the electrical plug 32.

The first electrical connecting means 36 extends internally along the stand 20, with a first electrical connector 30, preferably a female connector, exposed at a far end of the stand 20 relative to the body 14 for electrical connection to a power source, and a second electrical connector i.e. electrical plug 32 at a near end of the stand 20 relative to the body 14 for electrical connection to the operating circuit via the third electrical socket 34. Power is provided from an external power source, via the electrical connectors 30, 32 to 34 to the operating circuit.

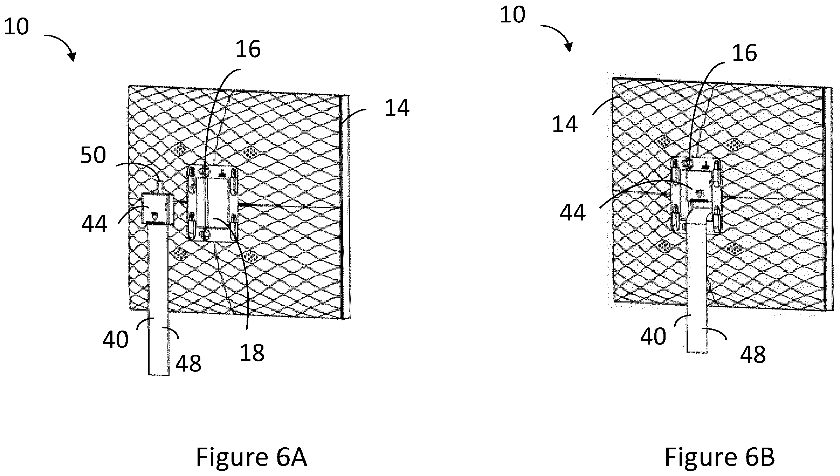

In a different scenario, if the user wants to use the photo frame 10 on a wall, which is a substantially vertical surface, he should replace the stand 20 by a second electrical connecting means 40 (Figures 6A and 6B).

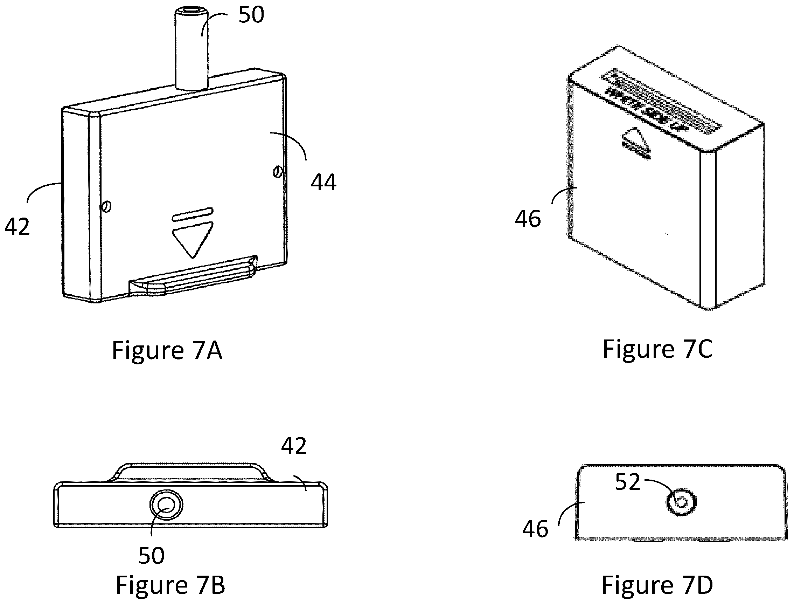

The second electrical connecting means 40 is formed by an upper terminal 42 (Figures 7A and 7B), a lower terminal 46 (Figures 7C and 7D, and a flat cable 48 extending across the upper and lower terminals 42, 46. The upper terminal 42 comprises an electrical connecting unit 44 with an electrical plug 50 protruding at the top thereof, similar to the second electrical connector 32 in Figure 2, for connection with the electrical docket 34 in the recess 18. The lower terminal 46 includes an electrical socket 52 at the bottom for connecting a power cable from an external power source.

Figures 6A and 6B illustrate the photo frame 10 when located in the hung position, with the use of the second electrical connecting means 40. One of the holes 16 in the body 14 may engage an engaging element, e.g. a screw, on the wall from which the body 14 is hung. The periphery of this hole 16 has a part inter-engageable and engaged with the screw (on the wall) , whereby the photo frame 10 is located in the hung position.

With the use of the second electrical connecting means 40, its upper terminal 42 is accommodated in the recess 18 of the photo frame body 14. Specifically, the recess 18 is adapted to receive the whole electrical connecting unit 44, such that the upper terminal 42 does not take up any space externally of the body 14. In addition, the flat cable 48 is rather thin and it lies flat between the body 14 and the wall. This design allows the photo frame 10 to be used on the wall, lying closest possible thereto and against it.

In general, the third electrical connector 34 in the recess 18 on the back of the body 14 is useful for connection selectively with the second electrical connecting means 32 of the stand 20 when the body 14 is in the standing position, as described earlier, or with the electrical connecting unit 44 of the second electrical connecting means 40 when the body 14 is in the hung position.

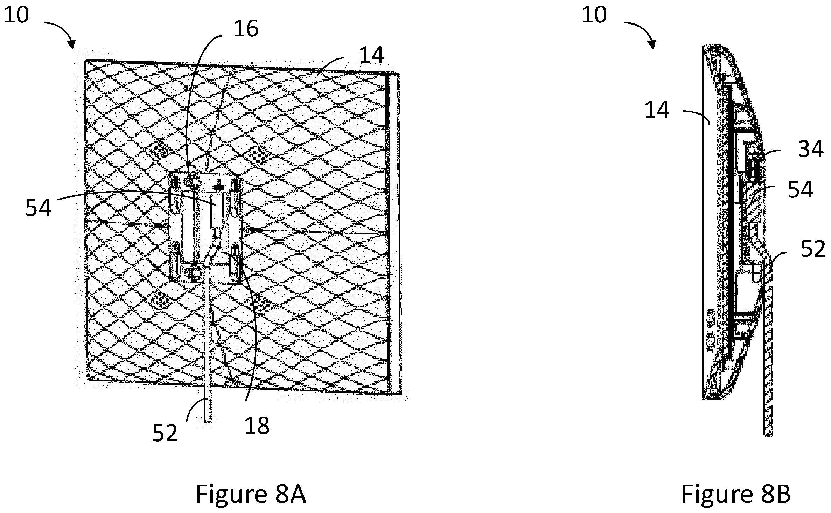

As a further option, referring to Figures 8A and 8B, a simple power cable 52 fitted with a 3.5mm electrical plug 54 may be used in place of the second electrically connecting means 40. In that case, the user may simply insert the electrical plug 54 into the electrical socket 34 in the recess 18. A thin cable should be chosen for use as the power cable 52. Alternatively or additionally, a notch or recess (not shown) may be formed in the periphery of the recess 18 for the power cable 52 to pass through without adding any thickness to the photo frame 10 on the back for lying closest possible to the wall.

The present invention, as discussed above, provides an electronic display with an additional and advantageous engaging feature over the pre-existing electronic displays. The engaging means, i.e. the holes 16 in the described embodiment, of the present electronic display is capable of selectively engaging a stand for use in a standing position or an engaging element for use in a hung position.

In addition, the bendable stand 20 allows the electronic display body 14 with the screen 12 to be placed in different orientations at different angles. For example, the body 14 may be arranged in a portrait orientation. The stand 20 is arranged not only to support the screen 12 and body 14, but also to connect power from an external power source to the operating circuit of the electronic display 10 due to the provision of the integrated power connection design.

The invention has been given by way of example only, and various other modifications of and/or alterations to the described embodiment may be made by persons skilled in the art without departing from the scope of the invention as specified in the appended claims. The described components of the electronic display may be arranged in a different way. Additionally, the electronic display may include additional components for carrying out additional functions.

For example, the screen of the electronic display may not be encircled in the support, but fixed and supported on top of the support. The screen may include a touch screen that allows the user to interact directly with the electronic display without using a smartphone, for example, to select a saved playlist from the electronic display, or to change a setting of the electronic display.

In addition or as an alternative to the wireless communication between the electronic display and the cloud, the electronic display may include an interface for receiving a memory stick or card on which digital contents are stored. The image processor may be operable to process the digital contents on the memory stick or card to be displayed on the screen.

For example, the construction of the stand may vary. The cover may be a grid supporting an engagement part which may not cover the recess or the holes of the support when the stand is attached to the support. The first, second and third electrical connectors may be of other forms of electrical connectors, i.e. any forms other than a 3.5 mm male or female connector.

Additionally, keyholes and hooking parts may be of other forms of engageable couplings. For example, the pair of engageable couplings may be magnetic coupling, threaded hole and fastener, bayonet coupling, etc.

Any reference to prior art contained herein is not to be taken as an admission that the information is common general knowledge, unless otherwise indicated.

## Claims

1. An electronic display (10) comprising:
a screen (12) for displaying digital content;
an electronic operating circuit for operating the screen;
a support (14) supporting the screen and the operating circuit, the support having a recess (18) and including engaging means (16) for use in positioning of the support in one of a standing position in which the support stands on a surface and a hung position in which the support is hung on a surface;
a stand (20) having an engagement part (24) engageable with the engaging means for standing the support on a surface in the standing position, the stand including a first electrical connecting means (30) for connecting the operating circuit to a power source; and
a second electrical connecting means (40) for connecting the operating circuit to a power source, the second electrical connecting means including an electrical connecting unit (44) for use in the recess of the support in the hung position, with the engaging means engaging an engaging element on a surface from which the support is hung.

2. The electronic display as claimed in claim 1, **characterized in that** the engagement part comprises a cover (26) and at least one engaging part (28) on the cover and engageable with the engaging means; and
preferably, said at least one engaging part comprises a hooking part.

3. The electronic display as claimed in claim 2, **characterized in that** the cover is adapted to cover the recess when the support is in the standing position.

4. The electronic display as claimed in claim 2 or claim 3, **characterized in that** the cover is adapted to cover the engaging means when the support is in the standing position.

5. The electronic display as claimed in any one of claims 1 to 3, **characterized in that** the recess is adapted to receive the whole electrical connecting unit when the support is in the hung position.

6. The electronic display as claimed in any one of claims 1 to 3, **characterized in that** the engaging means comprises at least one hole; and
preferably, said at least one hole has a periphery having a part inter-engageable selectively with the engagement part of the stand when the support is in the standing position or with an engaging element on a surface from which the support is hung; and
preferably, said at least one hole comprises a keyhole.

7. The electronic display as claimed in any one of claims 1 to 3, **characterized in that** the engaging means is provided on at least opposite sides of the recess.

8. The electronic display as claimed in any one of claims 1 to 3, **characterized in that** the stand has an elongated body which is bendable and is adapted to stay bent and internally along which the first electrical connecting means extends.

9. The electronic display as claimed in claim 8, **characterized in that** the first electrical connecting means includes a first electrical connector exposed at a far end of the stand relative to the support for electrical connection to a power source.

10. The electronic display as claimed in claim 8, **characterized in that** the first electrical connecting means includes a second electrical connector at a near end of the stand relative to the support for electrical connection to the operating circuit; and
preferably, the engagement part is provided at the near end of the stand alongside the second electrical connector.

11. The electronic display as claimed in any one of claims 1 to 3, **characterized in that** the second electrical connecting means includes a flat cable which is connected at one end with the electrical connecting unit, is connectable at the other end to a power source, and lies flat against the support when the electrical connecting unit is used in the recess of the support in the hung position.

12. The electronic display as claimed in any one of claims 1 to 3, **characterized in that** the recess is provided internally with a third electrical connector connected to the operating circuit, for connection selectively with the first electrical connecting means of the stand when the support is in the standing position or with the electrical connecting unit of the second electrical connecting means when the support is in the hung position.

13. The electronic display as claimed in any one of claims 1 to 3, **characterized in that** the operating circuit includes a wireless receiver for receiving digital content from a remote source and an image processor for processing the received digital content to be displayed on the screen.

14. The electronic display as claimed in any one of claims 1 to 3, **characterized in that** the digital content comprises still images, video images and sound.

15. The electronic display as claimed in any one of claims 1 to 3, **characterized in** comprising an electronic photo frame.

## Patentansprüche

1. Elektronisches Display (10), das Folgendes umfasst:
einen Bildschirm (12) zur Anzeige von digitalem Inhalt;
eine elektronische Betriebsschaltung zum Betreiben des Bildschirms;
eine Tragvorrichtung (14), die den Bildschirm und die Betriebsschaltung trägt, wobei die Tragvorrichtung eine Aussparung (18) aufweist und ein Eingriffsmittel (16) zur Verwendung beim Positionieren der Tragvorrichtung in einer stehenden Position, in der die Tragvorrichtung auf einer Fläche steht, und einer hängenden Position einschließt, in der die Tragvorrichtung an einer Fläche aufgehängt ist;
einen Ständer (20) mit einem Eingriffsteil (24), das mit dem Eingriffsmittel in Eingriff gebracht werden kann, um die Tragvorrichtung in der stehenden Position auf eine Fläche zu stellen, wobei der Ständer ein erstes elektrisches Verbindungsmittel (30) zum Verbinden der Betriebsschaltung mit einer Stromquelle einschließt; und
ein zweites elektrisches Verbindungsmittel (40) zum Verbinden der Betriebsschaltung mit einer Stromquelle, wobei das zweite elektrische Verbindungsmittel eine elektrische Verbindungseinheit (44) zur Verwendung in der Aussparung der Tragvorrichtung in der hängenden Position aufweist, wobei das Eingriffsmittel in ein Eingriffselement auf einer Fläche eingreift, an der die Tragvorrichtung aufgehängt ist.

2. Elektronisches Display nach Anspruch 1, **dadurch gekennzeichnet, dass** das Eingriffsteil eine Abdeckung (26) und mindestens ein Eingriffsteil (28) an der Abdeckung umfasst und mit dem Eingriffsmittel in Eingriff gebracht werden kann; und
das mindestens eine Eingriffsteil vorzugsweise ein Einhakteil umfasst.

3. Elektronisches Display nach Anspruch 2, **dadurch gekennzeichnet, dass** die Abdeckung zum Abdecken der Aussparung ausgelegt ist, wenn die Tragvorrichtung in der stehenden Position ist.

4. Elektronisches Display nach Anspruch 2 oder Anspruch 3, **dadurch gekennzeichnet, dass** die Abdeckung zum Abdecken des Eingriffsmittels ausgelegt ist, wenn die Tragvorrichtung in der stehenden Position ist.

5. Elektronisches Display nach einem der Ansprüche 1 bis 3, **dadurch gekennzeichnet, dass** die Aussparung zum Aufnehmen der gesamten elektrischen Verbindungseinheit ausgelegt ist, wenn die Tragvorrichtung in der hängenden Position ist.

6. Elektronisches Display nach einem der Ansprüche 1 bis 3, **dadurch gekennzeichnet, dass** das Eingriffsmittel mindestens ein Loch aufweist; und
das mindestens eine Loch vorzugsweise einen Umfang mit einem Teil hat, der selektiv mit dem Eingriffsteil des Ständers, wenn die Tragvorrichtung in der stehenden Position ist, oder mit einem Eingriffselement auf einer Fläche in Eingriff gebracht werden kann, an der die Tragvorrichtung aufgehängt ist; und
das mindestens eine Loch vorzugsweise ein Schlüsselloch umfasst.

7. Elektronisches Display nach einem der Ansprüche 1 bis 3, **dadurch gekennzeichnet, dass** das Eingriffsmittel zumindest auf gegenüberliegenden Seiten der Aussparung vorgesehen sind.

8. Elektronisches Display nach einem der Ansprüche 1 bis 3, **dadurch gekennzeichnet, dass** der Ständer einen länglichen Körper aufweist, der biegbar und so ausgelegt ist, dass er gebogen bleibt, und an dem sich das erste elektrische Verbindungsmittel innen entlang erstreckt.

9. Elektronisches Display nach Anspruch 8, **dadurch gekennzeichnet, dass** das erste elektrische Verbindungsmittel einen ersten elektrischen Verbinder einschließt, der an einem relativ zur Tragvorrichtung entfernten Ende des Ständers zur elektrischen Verbindung mit einer Stromquelle exponiert ist.

10. Elektronisches Display nach Anspruch 8, **dadurch gekennzeichnet, dass** das erste elektrische Verbindungsmittel einen zweiten elektrischen Verbinder an einem nahen Ende des Ständers relativ zur Tragvorrichtung zum elektrischen Verbinden mit der Betriebsschaltung einschließt; und
das Eingriffsteil vorzugsweise am nahen Ende des Ständers neben dem zweiten elektrischen Verbinder vorgesehen ist.

11. Elektronisches Display nach einem der Ansprüche 1 bis 3, **dadurch gekennzeichnet, dass** das zweite elektrische Verbindungsmittel ein Flachkabel einschließt, das an einem Ende mit der elektrischen Verbindungseinheit verbunden ist, am anderen Ende mit einer Stromquelle verbunden werden kann und flach an der Tragvorrichtung anliegt, wenn die elektrische Verbindungseinheit in der Aussparung der Tragvorrichtung in der hängenden Position verwendet wird.

12. Elektronisches Display nach einem der Ansprüche 1 bis 3, **dadurch gekennzeichnet, dass** die Aussparung innen mit einem dritten elektrischen Verbinder versehen ist, der mit der Betriebsschaltung zum selektiven Verbinden mit dem ersten elektrischen Verbindungsmittel des Ständers verbunden ist, wenn die Tragvorrichtung in der stehenden Position ist, oder mit der elektrischen Verbindungseinheit des zweiten elektrischen Verbindungsmittels, wenn die Tragvorrichtung in der hängenden Position ist.

13. Elektronisches Display nach einem der Ansprüche 1 bis 3, **dadurch gekennzeichnet, dass** die Betriebsschaltung einen drahtlosen Empfänger zum Empfangen von digitalem Inhalt von einer entfernten Quelle und einen Bildprozessor zum Verarbeiten des empfangenen digitalen Inhalts zur Anzeige auf dem Bildschirm einschließt.

14. Elektronisches Display nach einem der Ansprüche 1 bis 3, **dadurch gekennzeichnet, dass** der digitale Inhalt Standbilder, Videobilder und Ton umfasst.

15. Elektronisches Display nach einem der Ansprüche 1 bis 3, **dadurch gekennzeichnet, dass** es einen elektronischen Fotorahmen umfasst.

## Revendications

1. Affichage électronique (10) comprenant :
un écran (12) destiné à afficher un contenu numérique ;
un circuit de fonctionnement électronique destiné à faire fonctionner l'écran ;
un support (14) supportant l'écran et le circuit de fonctionnement, le support présentant un évidement (18) et incluant un moyen de mise en prise (16) destiné à une utilisation dans le positionnement du support dans une parmi une position verticale dans laquelle le support est à la verticale sur une surface et une position suspendue dans laquelle le support est suspendu sur une surface ;
un pied (20) présentant une partie de mise en prise (24) pouvant être mise en prise avec le moyen de mise en prise pour mettre le support à la verticale sur une surface dans la position verticale, le pied incluant un premier moyen de raccordement électrique (30) destiné à raccorder le circuit de fonctionnement à une source d'énergie ; et
un second moyen de raccordement électrique (40) destiné à raccorder le circuit de fonctionnement à une source d'énergie, le second moyen de raccordement électrique incluant une unité de raccordement électrique (44) destiné à une utilisation dans l'évidement du support dans la position suspendue, avec le moyen de mise en prise qui se met en prise avec un élément de mise en prise sur une surface à laquelle le support est suspendu.

2. Affichage électronique selon la revendication 1, **caractérisé en ce que** la partie de mise en prise comprend un cache (26) et au moins une partie de mise en prise (28) sur le cache et pouvant être mise en prise avec le moyen de mise en prise ; et
de préférence, ladite au moins une partie de mise en prise comprend une partie de crochetage.

3. Affichage électronique selon la revendication 2, **caractérisé en ce que** le cache est adapté pour recouvrir l'évidement lorsque le support est dans la position verticale.

4. Affichage électronique selon la revendication 2 ou la revendication 3, **caractérisé en ce que** le cache est adapté pour recouvrir le moyen de mise en prise lorsque le support est dans la position verticale.

5. Affichage électronique selon l'une quelconque des revendications 1 à 3, **caractérisé en ce que** l'évidement est adapté pour recevoir la totalité de l'unité de raccordement électrique lorsque le support est dans la position suspendue.

6. Affichage électronique selon l'une quelconque des revendications 1 à 3, **caractérisé en ce que** le moyen de mise en prise comprend au moins un trou ; et
de préférence, ledit au moins un trou présente une périphérie présentant une partie de mise en prise sélective avec la partie de mise en prise du pied lorsque le support est dans la position verticale ou avec un élément de mise en prise sur une surface à laquelle le support est suspendu ; et
de préférence, ledit au moins un trou comprend un trou de clé.

7. Affichage électronique selon l'une quelconque des revendications 1 à 3, **caractérisé en ce que** le moyen de mise en prise est fourni sur au moins des côtés opposés de l'évidement.

8. Affichage électronique selon l'une quelconque des revendications 1 à 3, **caractérisé en ce que** le pied présente un corps allongé qui peut être courbé et est adapté pour rester courbé et le long duquel s'étend en interne le premier moyen de raccordement électrique.

9. Affichage électronique selon la revendication 8, **caractérisé en ce que** le premier moyen de raccordement électrique inclut un premier connecteur électrique exposé au niveau d'une extrémité éloignée du pied par rapport au support destiné à un raccordement électrique à une source d'énergie.

10. Affichage électronique selon la revendication 8, **caractérisé en ce que** le premier moyen de raccordement électrique inclut un deuxième connecteur électrique au niveau d'une extrémité proche du pied par rapport au support destiné à un raccordement électrique au circuit de fonctionnement ; et
de préférence, la partie de mise en prise est fournie au niveau de l'extrémité proche du pied à proximité du deuxième connecteur électrique.

11. Affichage électronique selon l'une quelconque des revendications 1 à 3, **caractérisé en ce que** le second moyen de raccordement électrique inclut un câble plat qui est raccordé au niveau d'une extrémité à l'unité de raccordement électrique, peut être raccordé au niveau de l'autre extrémité à une source d'énergie, et est plat contre le support lorsque l'unité de raccordement électrique est utilisée dans l'évidement du support dans la position suspendue.

12. Affichage électronique selon l'une quelconque des revendications 1 à 3, **caractérisé en ce que** l'évidement comporte en interne un troisième connecteur raccordé au circuit de fonctionnement, pour être raccordé sélectivement au premier moyen de raccordement électrique du pied lorsque le support est dans la position verticale ou à l'unité de raccordement électrique du second moyen de raccordement électrique lorsque le support est dans la position suspendue.

13. Affichage électronique selon l'une quelconque des revendications 1 à 3, **caractérisé en ce que** le circuit de fonctionnement inclut un récepteur sans fil destiné à recevoir un contenu numérique en provenance d'une source à distance et un dispositif de traitement d'images destiné à traiter le contenu numérique reçu à afficher sur l'écran.

14. Affichage électronique selon l'une quelconque des revendications 1 à 3, **caractérisé en ce que** le contenu numérique comprend des images fixes, des images vidéo et du son.

15. Affichage électronique selon l'une quelconque des revendications 1 à 3, **caractérisé en ce qu'**il comprend un cadre photo électronique.
